# EUROPEAN PATENT SPECIFICATION

(11) **EP 2 330 884 B1**
(45) Date of publication and mention of the grant of the patent: **27.03.2013**
(21) Application number: 09785964.9
(22) Date of filing: 24.06.2009
(51) Int. Cl.: A01D 87/12, A01F 25/08, F26B 9/10

(54) **DRYING DEVICE FOR DRYING OBJECTS, IN PARTICULAR BALES OF HARVESTED MATERIAL**
TROCKNUNGSVORRICHTUNG ZUR TROCKNUNG VON OBJEKTEN, INSBESONDERE BALLEN VON ERNTEGUT
DISPOSITIF DE SÉCHAGE DESTINÉ À SÉCHER DES OBJETS, EN PARTICULIER DES BALLES DE MATIÈRE MOISSONNÉE

(30) Priority: 05.09.2008 DK 200801233
(43) Date of publication of application: 15.06.2011
(73) Proprietor: Teglgaard, Gert, 4640 Fakse (DK)
(72) Inventor: Teglgaard, Gert, 4640 Fakse (DK); Nielsen, Teddy S., 4654 Fakse Ladeplads (DK)
(74) Representative: Roerboel, Leif
(86) International application number: PCT/IB2009/006040
(87) International publication number: WO 2010/026451

(56) References cited:
- WO-A1-97/30318
- DE-A1- 2 160 866
- DE-A1- 2 854 559
- GB-A- 2 207 495
- SU-A1- 917 772

## Description

The invention relates to a drying device for drying objects, in particular bales of harvested material e.g. hay, straw and alfalfa.

SU 917772 A1 describes a haystack forklift loader, wherein the loader exhibits a built-in forklift comprising hollow forks to be driven into bales of hay for moving bales around and drying the bales from the inside by forcing compressed atmospheric air through the forks and into the bale by them having apertures therein.

The air compressor is mounted onboard the forklift loader.

Document DE 2854559 describes a fork aggregate having a flange arranged perpendicular to the length of the forks for the aggregate to be driven into a bale of hay by hammering on the flange, each forks being comprised of an inner cylindrical part and an outer conical mantle, and being provided with lateral openings for ventilating or drying the bale. Said aggregate solves, the problem of being used in narrow, hardly accessible spaces by primarily manually hammering the forks into the bales. Document GB 2 207 495 A discloses a drying device for drying objects according to the preamble of claim 1.

The problem to be solved by the invention is to allow forks to penetrate the hard-compressed harvested material without further noticeable compression of the bale, in order to facilitate the air penetrating and leaving the bale.

It is also an aim of the invention to create an optimal local distribution of the drying air by individually adjusting the air to each fork in dependence on moisture measured.

Finally, it is an aim of the invention to provide a drying device, which can be released from its transport vehicle, so as to be used in a different place, while the drying is progressing.

Accordingly, the invention suggests a drying device according to the introductory part of claim 1.

A characteristic feature according to the invention is that each displacement member is designed as a cage structure of bars and/or ribs extending between an air-blocking foot plate at a flange or base plate and a pointed end of said member. The acute angle extending between a rib or a flat bar provided in a longitudinal plane, and a longitudinal direction of the displacement member is typically between 10° and 30°, preferably an angle of 14°.

This design is an essential premise in order to let said members in a displacement movement penetrate a bale without the material being further compressed and thereby obstructing the free flow of drying air into the baled material.

The drying air is guided from the blower via a pipe or hose, into a channel and further into the hollow displacement members.

Preferably the blower is a separate unit being coupled directly to the pipe or via an intermediate air heater, after the device has penetrated a bale e.g. in form of a bigbale or Hesston bale.

Furthermore the device could comprise valves individually regulating the airflow into each displacement member according to discrete moisture measurements in the bale. Such moisture measurements could be performed by means of contact-based systems like a measuring fork, and even better by a microwave tester, working outside a bale but obtaining a much better inspection of the full volume of a bale. Depending on the locations of displacement members and of moisture contents, each valve could be adjusted to allow a larger or lesser amount of air passing through. The required moisture content would be in the range of 9-13 %.

The blower should deliver an air pressure in the range of 1500 to 4000 mm WG; preferably 3000 to 4000 mm WG, and an air flow of about 2000 m³/time.

The displacement member comprises at least three ribs or bars, providing air openings between them. In a preferred embodiment of the invention a displacement member consists of two flat bar ribs and two round steel ribs, said flat bar ribs preferably being in a vertical plane through the central axis of the displacement member in use.

In a further advantageous embodiment the ribs are fixed to the foot plate via a pipe extending from there, said pipe is communicating with the distribution channel and extending along a longitudinal direction of the displacement member. The ribs can be designed with a bend or curve between the foot plate and the acute end, whereby a much larger air delivery space is achieved in the displacement member.

Finally, the rear side of the drying device could have a mounting fixture provided with coupling means to be connected to corresponding coupling means on a transport vehicle. Thereby a vehicle equipped with the drying device could move a bale into a storage space leaving the drying device in the bale; thereafter connecting a source of air or heated air to said device for the required duration of drying.

Further there is provided a method to make use of the device according to the invention, wherein the device with its hollow displacement members are driven into a bale and then air is forced into the bale via the displacement members. The air entering the displacement members via a pipe and a distribution channel is preheated before entry.

Preferred embodiments of the invention are described in further details below and with reference to the drawing, wherein
- Fig.1: a schematic presentation of the drying device according to the invention coupled to a transport vehicle, and
- Fig. 2: an isometric view of the drying device according to the invention an released from the vehicle,
- Fig. 3: a partial view of the drying device shown in Fig. 1,
- Fig. 4: a front view of a displacement member of the drying device in Fig. 1,
- Fig. 5: a side view of a displacement member,
- Fig. 6: a plan view of the displacement member in Fig. 5, and
- Fig. 7: a view of the drying device connected with an air supply hose.

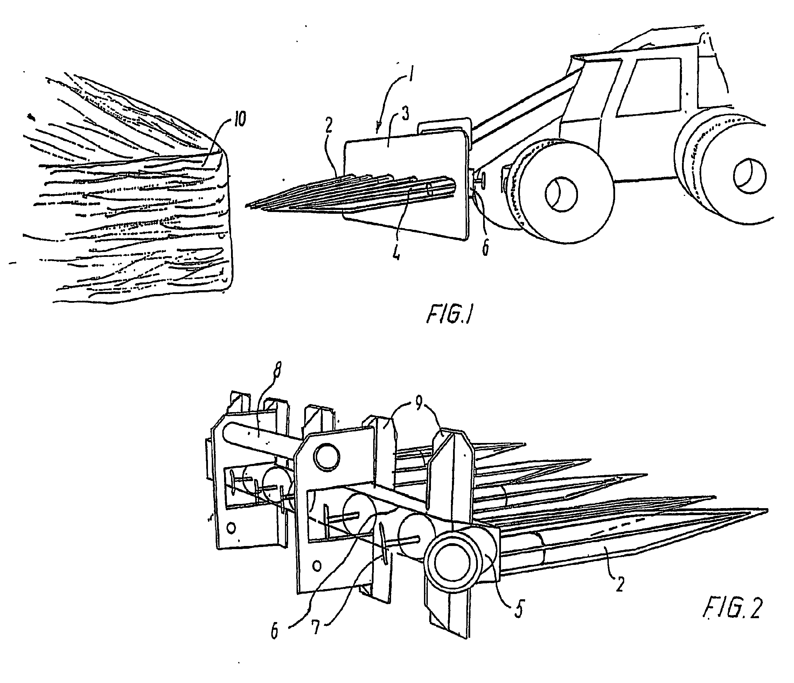

In fig. 1 a drying device 1 according to the invention is shown. Said drying device is mounted in a releasable manner on a typical front loader accepting many different devices e.g. a bale grappler, a bucket, a shovel etc.

The drying device 1 comprises a base plate 3, a first side of which is adapted to be mounted on a front loader, and hollow displacement members or forks 2 are fixed to the opposite side of the base plate 3, pointing in a longitudinal direction away from the loader.

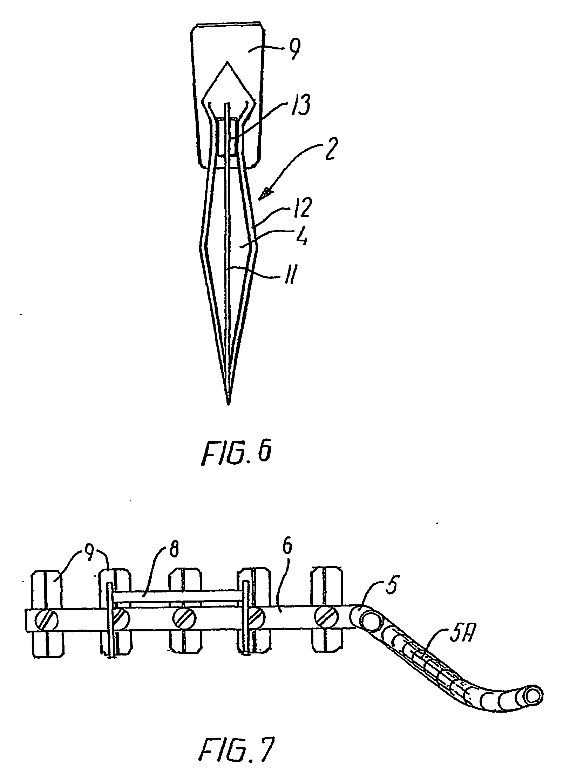

The forks 2 (Fig. 2 and 7) can be connected 5A to an air source delivering compressed air, preferably hot air, into an inlet pipe 5 for a distribution channel 6, which may share a wall with the base plate 3, and onto the hollow forks 2, wherefrom the air exits through openings 4 in said forks 2. The air pressure is in the range of 1500 to 4000 mm WG, preferably 3000 to 4000 mm WG; especially 3500 mm WG.

In use, the forks 2 are forced into a bale 10 of hay or like and due to them being cut in an acute angle to the longitudinal direction thereof, the material of the bale 10 is easily displaced without being compressed to any noticeable extent. The result of this is a very even distribution of air arriving from the hollow forks 2 and exiting easily through the bale 10 in all directions, thereby uniformly reducing the moisture content thereof. The acute angle is chosen to be 14° in a preferred embodiment of the invention.

Fig. 2-5 show a displacement member 2 consisting of a foot plate 9 fixedly attached to the base plate/channel 3 or 6, and a pipe 13 extending from the foot plate 9 and guiding air from the channel 6 into the interior of a bale 10. The pipe 13 also constitutes the fixing point for bars or ribs 11, 12, which extend from the foot plate/pipe 9, 13 and are combined in a pointed end 14, and wherein there are openings 4 between the ribs 11, 12, for drying air to pass through.

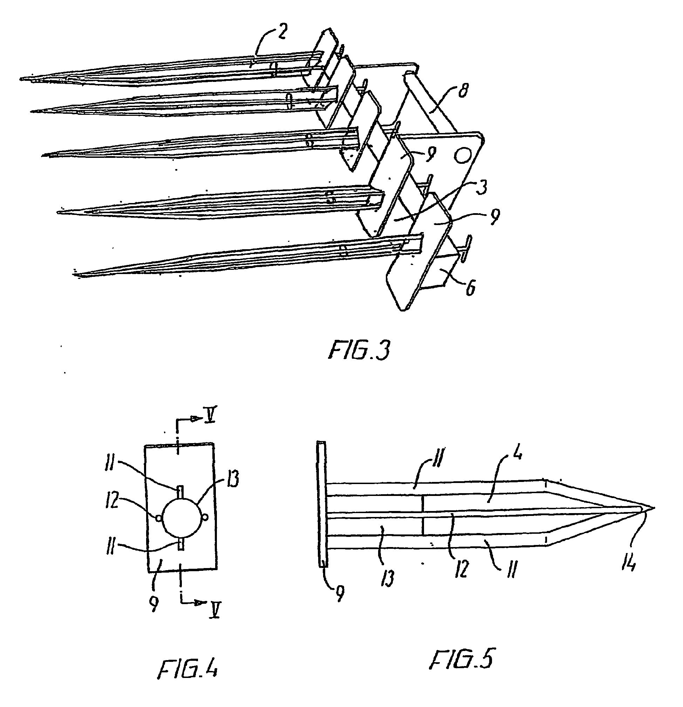

In order to increase the air space in the displacement member 2 ribs or bars 11, 12 can be designed with a bend or curve (Fig. 5 and 6) between the foot plate 9 and the pointed end 14.

The channel 6 comprises valves 7 to individually regulate the amount of air sent through the forks 2. The individual regulation is based on discrete measurements of moisture throughout a bale 10.

The moisture measurements are preferably being performed by means of a measuring spear or similar moisture tester.

Preferably an air pressure of 3500 mm WG or 35000 Pa (Pascal) and airflow of about 2000 m³/time are used.

Preferably the drying device 1 having transported a bale 10 of hay to its destination in a barn is released from the loader and left in the bale 10. Next the blower (not shown) is connected via a hose 5A to the pipe 5 and is usually running for a period of several hours, until moisture content is reduced to an acceptable level e.g. 9-13%, if the bale 10 is meant to be used in straw-fired heating plants.

Meanwhile the loader may be provided with another similar drying device 1 ready to receive a next bale 10.

The mounting means or coupling means 8 is of a standard configuration adapted to one or several types of loaders, and it is placed on the first side of the base plate 3.

## Claims

1. Drying device (1) for drying objects, in particular bales (10) of harvested material e.g. hay, straw and alfalfa, comprising one or more hollow displacement members (2) mounted on a base plate (3), said device being connectable to a blower communicating with and forcing air into the displacement members (2), wherefrom the air is discharged through openings (4) into a bale (10), each displacement member (2) being designed as a cage structure, **characterized in that** the cage structure consists of bars or ribs (11, 12) extending between an air-blocking foot plate (9) at the base plate (3) and a pointed end (14) of said member (2).

2. Drying device according to claim 1, **characterized by** having a pipe (5) adapted to lead air from an external blower into a distribution channel (6) and further into the hollow displacement members (2).

3. Drying device according to any previous claims, **characterized in, that** the pipe (5) is adapted to be coupled to an external blower, directly or indirectly, after the device has penetrated a bale (10).

4. Drying device according to any previous claims, **characterized in, that** it comprises valves (7) in the distribution channel (6) to individually regulate the airflow into each displacement members (2) according to discrete readings of moisture content in the bale (10).

5. Drying device according to claim 1, **characterized in, that** the displacement members (2) consist of at least two ribs or bars (11, 12) presenting air openings (4) between them.

6. Drying device according to claim 5, **characterized in, that** the displacement members (2) consist of two flat bar ribs (11) and two round steel ribs (12), said flat bar ribs (11) preferably being in a vertical plane through the central axis of the displacement member (2) in use.

7. Drying device according to claim 5 or 6, **characterized in, that** the ribs (11, 12) are fixed to a foot plate (9) on the base plate (3), thereby also to the air channel (6) via a pipe (13) extending from there and communicating with said channel (6).

8. Drying device according to any of claims 5-7, **characterized in, that** each ribs (11, 12) forms a bend or a curve between the foot plate (9) and the pointed end (14), wherein the ribs preferably form an angle with the longitudinal direction thereof in the range 10-30°; especially 14°.

9. Drying device according to any previous claims, **characterized in, that** the mounting base plate (3) is provided with coupling means (8) to be connected to corresponding standard coupling means on a transport vehicle.

10. Method of using a drying device according to any of claims 1-9, **characterized in, that** the device with its hollow displacement members (2) are driven into a bale (10), and then air is forced into the bale (10) via the displacement members (2).

11. Method according to claim 10, **characterized in, that** the air entering the displacement members (2) via a pipe (5) and a distribution channel (6) is preheated before entry.

12. Method according to claim 10 or 11, **characterized in, that** the pressure of air entering the pipe (5) is in the range of 1500 to 4000 mm WG; especially 3500 mm WG.

## Patentansprüche

1. Trocknungsvorrichtung (1) zur Trocknung von Objekten, insbesondere Ballen (10) von Erntegut, zum Beispiel Heu, Stroh und Alfalfa, wo die Vorrichtung ein oder mehrere hohle Verdrängungselemente (2) umfasst, die auf einer Tragplatte (3) montiert sind, und wo die Vorrichtung mit einem Bläser verbunden werden kann, wo der Bläser mit den Verdrängungselementen (2) in Verbindung steht und Luft in die Verdrängungselemente (2) drängt, von welchen Elementen die Luft durch Öffnungen (4) in einen Ballen (10) abgeleitet wird, und wo jedes Verdrängungselement (2) als eine Käfigstruktur aufgebaut ist, **dadurch gekennzeichnet, dass** die Käfigstruktur aus Stäben oder Rippen (11 , 12) besteht, die sich zwischen einer luftblockierenden Fussplatte (9) an der Tragplatte (3) und einem spitzen Ende (14) des Elements (2) erstrecken.

2. Trocknungsvorrichtung nach Anspruch 1, durch ein Rohr (5) gekennzeichnet, das dazu angepasst ist, Luft von einem getrennten Bläser in einen Absatzkanal (6) und weiter in die hohlen Verdrängungselemente (2) zu leiten.

3. Trocknungsvorrichtung nach einem der vorigen Ansprüche, **dadurch gekennzeichnet, dass** das Rohr (5) dazu angepasst ist, an einen getrennten Bläser gekoppelt zu sein, direkt oder indirekt, nachdem die Vorrichtung den Ballen (10) durchgestochen hat.

4. Trocknungsvorrichtung nach einem der vorigen Ansprüche, **dadurch gekennzeichnet, dass** die Vorrichtung Ventile (7) in dem Absatzkanal (6) umfasst für eine individuelle Regulierung des Luftstroms in die einzelnen Verdrängungselemente (2) gemäss eigenständigen Feuchtigkeitsmessungen in dem Ballen (10).

5. Trocknungsvorrichtung nach Anspruch 1, **dadurch gekennzeichnet, dass** die Verdrängungselemente (2) aus mindestens zwei Stäben oder Rippen (11, 12) bestehen, die zwischen sich Abluftöffnungen (4) aufzeigen.

6. Trocknungsvorrichtung nach Anspruch 5, **dadurch gekennzeichnet, dass** die Verdrängungselemente (2) aus zwei flachen Stabrippen (11) sowie zwei runden Stahlrippen (12) bestehen, wo die flachen Stabrippen (11) vorzugsweise in einer Senkrechtebene durch die Mittelachse des einschlägigen Verdrängungselements (2) liegen.

7. Trocknungsvorrichtung nach Anspruch 5 oder 6, **dadurch gekennzeichnet, dass** die Rippen (11 , 12) an einer an der Tragplatte (3) platzierten Fussplatte (9) festgemacht sind und damit auch an dem Luftkanal (6) durch das Rohr (13), das sich davon erstreckt und mit dem Kanal (6) in Verbindung steht.

8. Trocknungsvorrichtung nach einem der Ansprüche 5-7, **dadurch gekennzeichnet, dass** jede Rippe (11, 12) einen Bogen oder eine Kurve zwischen der Fussplatte (9) und dem spitzen Ende (14) bildet, wo die Rippen vorzugsweise einen Winkel mit der Längsrichtung davon im Bereich von 10-30°; besonders **14** ⁰, bilden.

9. Trocknungsvorrichtung nach einem der vorigen Ansprüche, **dadurch gekennzeichnet, dass** die Anbau-Tragplatte (3) mit einem Ankopplungsmittel versehen ist (8) für den Anschluss mit einem entsprechenden standardisierten Ankopplungsmittel eines Transportfahrzeugs.

10. Verwendung einer Trocknungsvorrichtung nach einem der Ansprüche 1-9, **dadurch gekennzeichnet, dass** die Vorrichtung mit ihren hohlen Verdrängungselementen (2) in einen Ballen (10) eingetrieben wird, wonach Luft in den Ballen (10) durch die Verdrängungselemente (2) drängt.

11. Verfahren nach Anspruch 10, **dadurch gekennzeichnet, dass** die Luft, die durch ein Rohr (5) und einen Absatzkanal (6) in die Verdrängungselemente (2) einläuft, vor dem Einzug vorgewärmt ist.

12. Verfahren nach Anspruch 10 oder 11, **dadurch gekennzeichnet, dass** der Druck der Luft, die in das Rohr (5) einläuft im Bereich von 1500 bis 4000 mm WS; besonders 3500 mm WS, ist.

## Revendications

1. Dispositif de séchage (1) destiné à sécher des objets, en particulier des balles (10) de matière moissonnée, p.ex. du foin, de la paille et de la luzerne, comprenant un ou plusieurs éléments de déplacement creux (2) montés sur une plaque de base (3), ledit dispositif pouvant être raccordé à un ventilateur qui communique avec les éléments de déplacement (2) et qui force de l'air à l'intérieur de ceux-ci, à partir de quels éléments de déplacement l'air est rejeté à travers des ouvertures (4) jusqu'à l'intérieur d'une balle (10), chaque élément de déplacement (2) étant élaboré comme une structure de cage, **caractérisé en ce que** la structure de cage consiste en des barres ou des nervures (11, 12) s'étendant entre une platine de blocage d'air (9) et la plaque de base (3) et une extrémité pointue (14) dudit élément (2).

2. Dispositif de séchage selon la revendication 1, **caractérisé en ce que** le dispositif a un tuyau (5) adapté pour conduire l'air d'un ventilateur externe jusque dans un canal de distribution (6) et ultérieurement jusque dans les éléments de déplacement creux (2).

3. Dispositif de séchage selon l'une quelconque des revendications précédentes, **caractérisé en ce que** le tuyau (5) est adapté à être accouplé à un ventilateur externe, directement ou indirectement, après que le dispositif à pénétré une balle (10).

4. Dispositif de séchage selon l'une quelconque des revendications précédentes, caractérisé en étant compris par des vannes (7) dans le canal de distribution (6) pour régler individuellement le débit d'air dans chaque élément de déplacement (2) selon des niveaux discrets du contenu d'humidité dans la balle (10).

5. Dispositif de séchage selon la revendication 1, **caractérisé en ce que** les éléments de déplacement (2) consistent en au moins deux barres ou nervures (11, 12) qui ont des ouvertures d'air (4) entre elles.

6. Dispositif de séchage selon la revendication 5, **caractérisé en ce que** les éléments de déplacement (2) consistent en deux nervures de barre plates (11) et deux nervures d'acier ronds (12), lesdites nervures de barre plates (11) étant de préférence dans un plan vertical à travers l'axe central de l'élément de déplacement (2) qui est utilisé.

7. Dispositif de séchage selon les revendications 5 ou 6, **caractérisé en ce que** les nervures (11, 12) sont fixées à une platine (9) sur la plaque de base (3), et ainsi également au canal d'air (6) par la voie d'un tuyau (13) s'étendant de là et communicant avec ledit canal d'air (6).

8. Dispositif de séchage selon l'une quelconque des revendications 5 à 7, **caractérisé en ce que** chacune des nervures (11, 12) forment une flèche ou une courbe entre la platine (9) et l'extrémité pointue (14), où les nervures forment de préférence un angle avec la direction longitudinale de celles-ci dans une plage de 10° à 30°, particulièrement de 14°.

9. Dispositif de séchage selon l'une quelconque des revendications précédentes, **caractérisé en ce que** la plaque de base (3) est fournie avec des moyens d'accouplage (8) à être raccordés aux moyens d'accouplage standard correspondants sur un véhicule de transport.

10. Procédé d'utilisation d'un dispositif de séchage selon l'une quelconque des revendications 5 à 9, **caractérisé en ce que** le dispositif avec ses éléments de déplacement creux (2) sont entrainés à l'intérieur d'une balle (10), après quoi de l'air est forcé à l'intérieur de la balle (10) par voie des éléments de déplacement (2).

11. Procédé selon la revendication 10, **caractérisé en ce que** l'air qui entre dans les éléments de déplacement (2) par voie d'un tuyau (5) et d'un canal de distribution (6), est préchauffé avant son entrée.

12. Procédé selon les revendications 10 ou 11, **caractérisé en ce que** la pression de l'air qui entre dans le tuyau (5) se situe dans une plage de 1500 à 4000 mm de colonne d'eau; particulièrement de 3500 mm de colonne d'eau.
